# EUROPEAN PATENT APPLICATION

(11) **EP 4 632 918 A1**
(43) Date of publication of application: **15.10.2025**
(21) Application number: 24792883.1
(22) Date of filing: 28.03.2024
(51) Int. Cl.: H01M 50/342, H01M 50/247, B60L 50/64, H01M 50/383, H01M 50/24, H01M 50/204

(54) **BATTERY PACK**

(30) Priority: 18.04.2023 KR 20230051029; 19.03.2024 KR 20240037931
(71) Applicant: LG Energy Solution, Ltd., Seoul 07335 (KR)
(72) Inventor: JEONG, Jae-Hong, Daejeon 34122 (KR); KO, Yoon-Oh, Daejeon 34122 (KR); PARK, Jin-Ju, Daejeon 34122 (KR); YOON, Young-Il, Daejeon 34122 (KR); JUNG, Hye-Mi, Daejeon 34122 (KR)
(74) Representative: Plasseraud IP
(86) International application number: PCT/KR2024/003962
(87) International publication number: WO 2024/219696

(57) **Abstract**

Disclosed is a battery pack.

The battery pack according to an embodiment of the present disclosure may include: a base plate; a battery module installed on the base plate and having a first venting hole on its upper surface; a venting cover coupled to the upper surface of the battery module; a pack cover configured to cover the venting cover; and an elastic member provided between the venting cover and the pack cover.

## Description

### TECHNICAL FIELD

The present disclosure relates to a battery pack.

The present application claims priority to Korean Patent Application No. 10-2023-0051029 filed on April 18, 2023 and Korean Patent Application No. 10-2024-0037931 filed on March 19, 2024 in the Republic of Korea, the disclosures of which are incorporated herein by reference.

### BACKGROUND ART

As the demand for portable electronic products such as smartphones, tablet PCs, and smart watches increases significantly, and as electric vehicles become widespread, active research on batteries mounted to them, especially secondary batteries capable of being repeatedly charged and discharged, is underway.

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

In general, the lithium secondary batteries use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, lithium secondary batteries may be classified, depending on the shape of the exterior case, into can-type secondary batteries in which the electrode assembly is stored in a metal can and pouch-type secondary batteries in which the electrode assembly is stored in a pouch of an aluminum laminate sheet.

Recently, secondary batteries have been widely used in medium and large devices such as electric vehicles and energy storage systems (ESSs) for driving and storing energy, as well as in small devices such as portable electronic devices.

A plurality of secondary batteries may be electrically connected and stored inside a module case, thereby forming a battery module. In this case, each secondary battery included in the battery module may be referred to as a battery cell. In addition, multiple battery modules may be connected to each other to form a battery pack.

However, in the case where a battery pack includes multiple battery modules therein and where each battery module includes multiple battery cells, it may be vulnerable to a chain thermal reaction between the battery modules or between the battery cells. For example, if an event such as thermal runaway occurs inside one battery module, the thermal runaway needs to be prevented from transferring to other battery modules or other battery cells. If the propagation of thermal runaway between the battery modules or the battery cells fails to be properly suppressed, an event occurring in a specific battery module or battery cell may cause a chain thermal reaction in other battery modules or other battery cells, leading to explosion or fire and worsening the same.

In particular, if an event such as thermal runaway occurs in any one battery module, gas or flame may be randomly discharged to the outside. In this case, if the discharge of gas or flame is not properly controlled, the gas or flame will be discharged to other battery modules, causing a chain thermal reaction in other battery modules. In particular, a module terminal may be provided on the front side of the battery module, and for example, a configuration, such as a module bus-bar, to be electrically connected to another battery module or battery pack may be provided thereon. Therefore, if flame is discharged toward the front of the battery module, the module terminal may be damaged in the battery pack, causing electrical short circuits. In addition, other battery modules may exist in front of a battery module, so if flame is discharged toward the front of a specific battery module, the discharged flame may be directed to another battery module, making it easy for fire to spread between the battery modules.

If thermal propagation between the battery modules or battery cells is not properly controlled, the voltage of the battery module or battery pack may rapidly drop. In addition, this may cause sudden interruption of devices equipped with the battery modules or battery packs, resulting in unexpected damage. For example, if the voltage suddenly drops in the battery pack while the electric vehicle is driving, it is impossible to secure enough time to move the electric vehicle to a safe location.

In addition, if fire or explosion suddenly occurs due to failure to properly control thermal propagation between the battery modules or battery cells, the users are more likely to be injured. For example, when thermal runaway occurs in an electric vehicle, if enough time fails to be secured until a full-scale fire develops, occupants may not be able to escape safely.

### DISCLOSURE

### Technical Problem

The present disclosure has been designed to solve the problems of the related art, and therefore the present disclosure is directed to providing a battery pack with an improved structure capable of properly controlling the discharge of flame generated inside the battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a base plate; a battery module installed on the base plate and having a first venting hole on its upper surface; a venting cover coupled to the upper surface of the battery module; a pack cover configured to cover the venting cover; and an elastic member provided between the venting cover and the pack cover.

In addition, the elastic member may be fixed between the venting cover and the pack cover.

In addition, the elastic member may be compressed between the venting cover and the pack cover.

In addition, the elastic member may be attached to the upper surface of the venting cover.

In addition, a plurality of elastic members may be provided.

In addition, the venting cover may be coupled to the upper surface of the battery module and may include a first cover configured to cover the first venting hole.

In addition, the first cover may have a score line facing the first venting hole.

In addition, the score line may be configured to rupture when a thermal event occurs in the battery module.

In addition, the score line may extend along the perimeter of the first venting hole.

In addition, the venting cover may further include a second cover coupled to the top of the first cover.

In addition, the second cover may include a second venting hole configured to expose the score line.

In addition, the first venting hole and the second venting hole may be configured to communicate with each other when a thermal event occurs in the battery module.

A vehicle according to another aspect of the present disclosure may include the battery pack of the present disclosure.

### Advantageous Effects

According to at least one of the embodiments of the present disclosure, when gas or flame is generated inside the battery module, it is possible to appropriately control the discharge of the gas or flame.

According to at least one of the embodiments of the present disclosure, it is possible to improve the electrical safety of the battery pack.

According to at least one of the embodiments of the present disclosure, heat propagation is able to be suppressed.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating a battery pack according to an embodiment of the present disclosure.
FIG. 2 is a diagram illustrating the battery pack in FIG. 1 in which a pack cover is separated.
FIG. 3 is a diagram illustrating the battery pack in FIG. 1 in which some elements are separated.
FIG. 4 is a diagram illustrating a battery module of the battery pack in FIG. 3.
FIG. 5 is a diagram illustrating the battery module in FIG. 4 in which some elements are separated.
FIG. 6 is an exploded view illustrating the battery module, the venting cover, and an elastic member in FIG. 3.
FIG. 7 is a diagram illustrating the coupled state of the elements in FIG. 6.
FIG. 8 is a cross-sectional view taken along line B-B' in FIG. 2.
FIG. 9 is a cross-sectional view taken along line A-A' in FIG. 1.
FIG. 10 is a cross-sectional view of the configuration in FIG. 9 when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

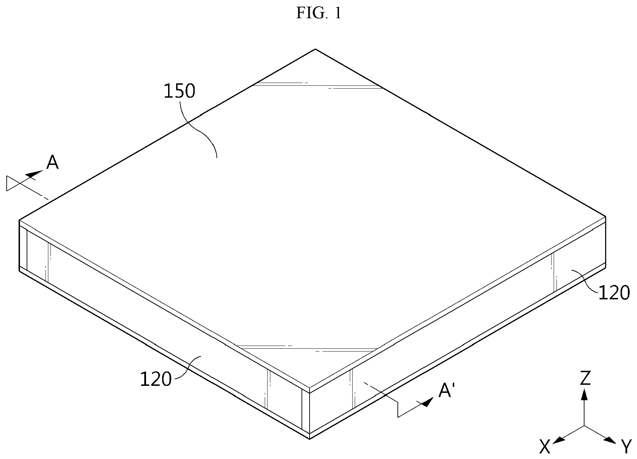

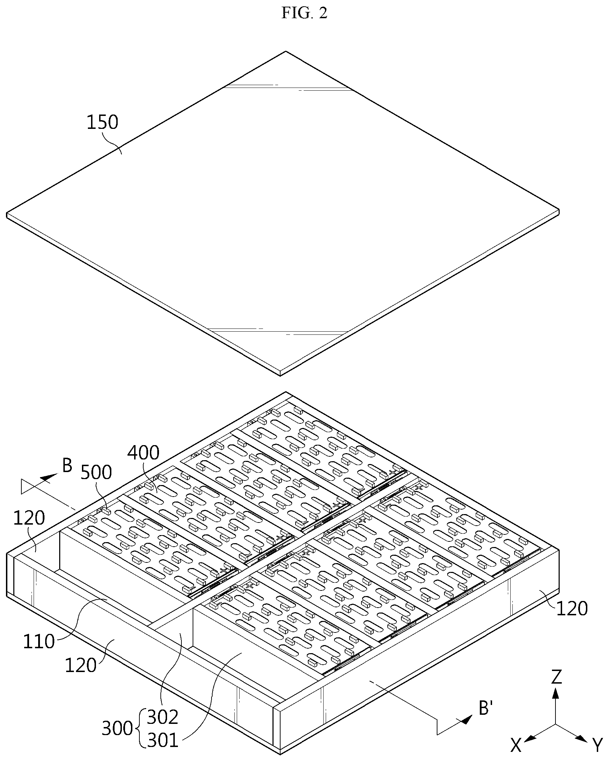

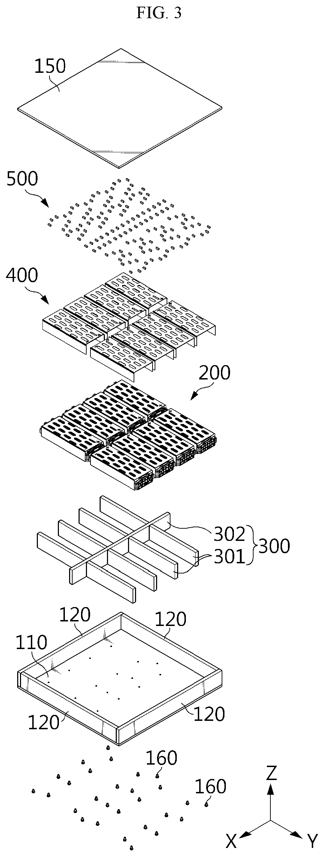

FIG. 1 is a diagram illustrating a battery pack according to an embodiment of the present disclosure. FIG. 2 is a diagram illustrating the battery pack in FIG. 1 in which a pack cover 150 is separated. FIG. 3 is a diagram illustrating the battery pack in FIG. 1 in which some elements are separated.

Referring to FIGS. 1 to 3, the battery pack according to an embodiment of the present disclosure may include a base plate 110, a battery module 200, a venting cover 400, a pack cover 150, and an elastic member 500.

The base plate 110 may have a square shape. The base plate 110 may have a flat shape. The base plate 110 may form the exterior of the battery pack. The base plate 110 may provide an inner space of the battery pack.

A plurality of battery modules 200 may be provided. The battery modules 200 may be installed, fastened, coupled, fixed, or attached to the upper surface of the base plate 110.

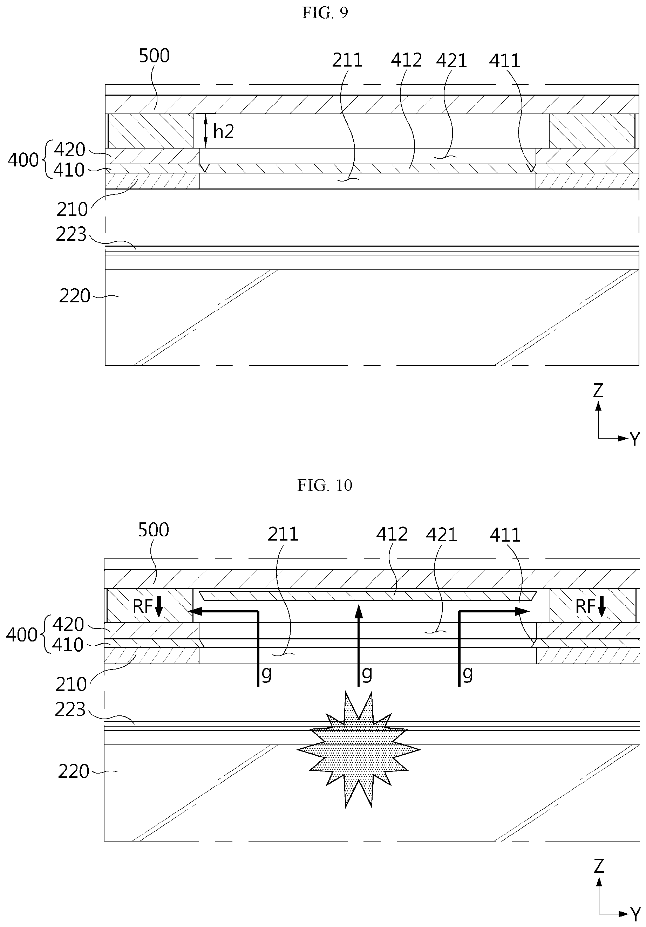

The battery module 200 may have a first venting hole 211 formed on its upper surface. The first venting hole 211 may be formed such that the inside and outside of the battery module 200 communicate with each other. A plurality of first venting holes 211 may be provided. If a thermal event occurs in the battery module 200, venting gas g (see FIG. 10) may be discharged through the first venting hole 211.

The venting cover 400 may be installed, fastened, coupled, fixed, or attached to the top of the battery module 200. The venting cover 400 may facilitate the discharge of venting gas g. In addition, the venting cover 400 may protect the battery module 200 from flame or venting gas g generated outside the battery module 200.

The pack cover 150 may have a square plate shape. The pack cover 150 may have a flat shape. The pack cover 150 may form the exterior of the battery pack. The pack cover 150 may cover the inner space of the battery pack.

The elastic member 500 may be located between the venting cover 400 and the pack cover 150. The elastic member 500 may provide restoring force RF (see FIG. 10) to the venting cover 400. In addition, the elastic member 500 may provide restoring force RF to the pack cover 150.

When a thermal event occurs in the battery module 200, venting gas g may be discharged at high pressure. This may cause the venting cover 400 to be separated from the battery module 200.

According to the configuration of the present disclosure, the thermal safety of the battery pack may be improved. The elastic member 500 may provide restoring force RF to the venting cover 400, so that the coupled state of the venting cover 400 and the battery module 200 may remain stable.

Referring to FIGS. 1 to 3, the battery pack according to an embodiment of the present disclosure may include side walls 120 and partition walls 300.

The side wall 120 may be installed, fastened, coupled, fixed, or attached to the upper surface of the base plate 110. The side walls 120 may be comprised of four walls. The side walls 120 may be disposed along the perimeter of the base plate 110. The side walls 120 may form the exterior of the battery pack. The side wall 120 may provide an inner space. The battery module 200 may be surrounded by the side walls 120.

The partition walls 300 may include a first partition wall 301 and a second partition wall 302. A plurality of partition walls 300 may be provided. The partition walls 300 may be installed, fastened, fixed, coupled, or attached to the upper surface of the base plate 110. The partition walls 300 may partition the inner space of the battery pack. Each battery module 200 may be located in each space divided by the partition walls 300. In addition, the partition wall 300 may face at least one side of the battery module 200.

The pack cover 150 may have a square plate shape. The pack cover 150 may have a flat shape. The pack cover 150 may form the exterior of the battery pack. The pack cover 150 may cover the inner space of the battery pack. The pack cover 150 may be installed, fastened, coupled, fixed, or attached to the side walls 120. In addition, the pack cover 150 may be installed, fastened, coupled, fixed, or attached to the partition walls 300. In addition, the pack cover 150 may cover the top of the battery module 200.

A fastening member 160 may fasten the base plate 110 and the side wall 120. In addition, the fastening member 160 may fasten the base plate 110 and the partition wall 300.

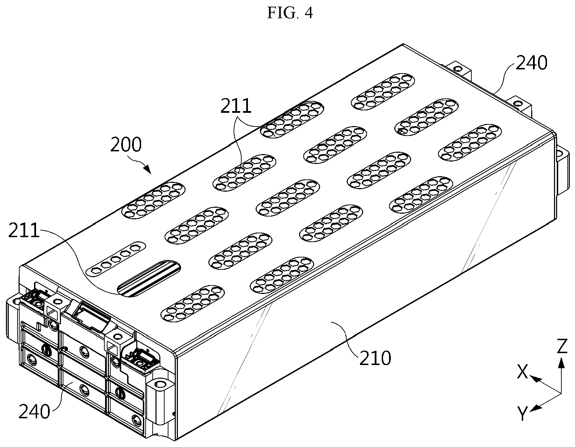

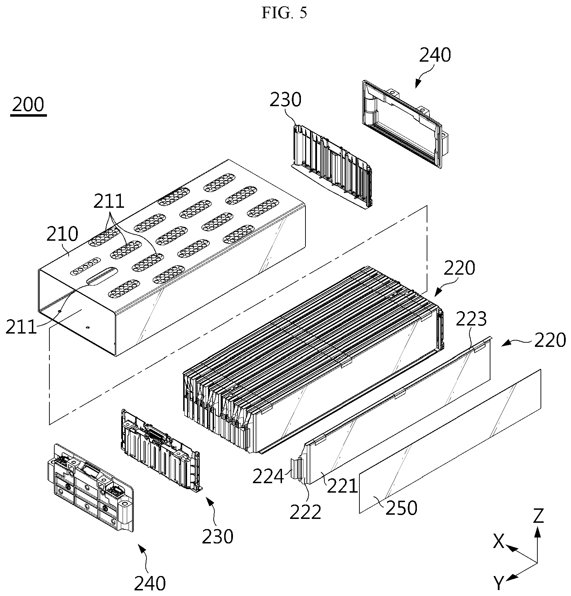

FIG. 4 is a diagram illustrating a battery module 200 of the battery pack in FIG. 3. FIG. 5 is a diagram illustrating the battery module 200 in FIG. 4 in which some elements are separated.

Referring to FIGS. 3 to 5, the battery module 200 of the battery pack according to an embodiment of the present disclosure may include a case 210, a plurality of battery cells 220, a pad 250, and a bus-bar frame assembly 230, and an end cover 240.

The case 210 may have a cuboid shape. The case 210 may also be referred to as a frame 110. The case 210 may provide an inner space. The case 210 may have an upper surface, a lower surface, and a pair of side surfaces. In addition, the case 210 may be configured such that the front and back sides are open. The case 210 may have a first venting hole 211 on its upper surface. The first venting hole 211 may be formed such that the inside and outside of the case 210 communicate with each other.

A plurality of battery cells 220 may be stacked in the left-right direction or the X-axis direction. In this case, the battery cell 220 may indicate a secondary battery. The battery cell 220 may include an accommodation portion 221 storing an electrode assembly, first sealing portions 222 respectively protruding toward the front and rear sides of the accommodation portion 221, and a second sealing portion 223 protruding toward the upper side of the accommodation portion 221. In addition, the battery cell 220 may include electrode leads 224 that respectively protrude toward the front and rear sides of the first sealing portion 222. In particular, the battery cell 220 may be a pouch-type secondary battery. The respective battery cells 220 may extend in the front-back direction or the Y-axis direction. The electrode leads 121 may protrude to the front and rear of each battery cell 220.

Pads 250 may be disposed between a plurality of battery cells 220. For example, the pads 250 may be disposed between at least some of the battery cells 220 and/or the outer side of the stack. For example, the pads 250 may be disposed between every four battery cells 220 stacked in the left-right direction.

The pad 250 may be made of an elastic material to absorb swelling of the battery cell 220. For example, the pad 250 may be made of a foam material such as polyurethane. Alternatively, the pad 250 may be made of a material capable of blocking heat or flame. For example, the pad 250 may be made of a heat-resistant or fire-retardant material such as silicon or mica.

The bus-bar frame assembly 230 may be provided at the front and rear of the plurality of battery cells 220, respectively. The bus-bar frame assembly 230 may be electrically connected to the electrode leads 121 of the plurality of battery cells 220.

A pair of end covers 240 may be coupled to the front and rear sides of the case 210, respectively. The pair of end covers 240 may cover the front and rear sides of the case 210. The end cover 240 may have a square shape.

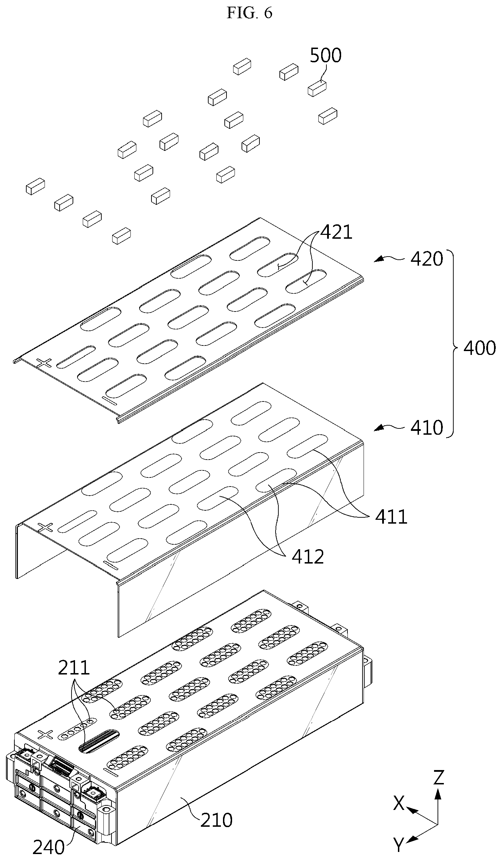

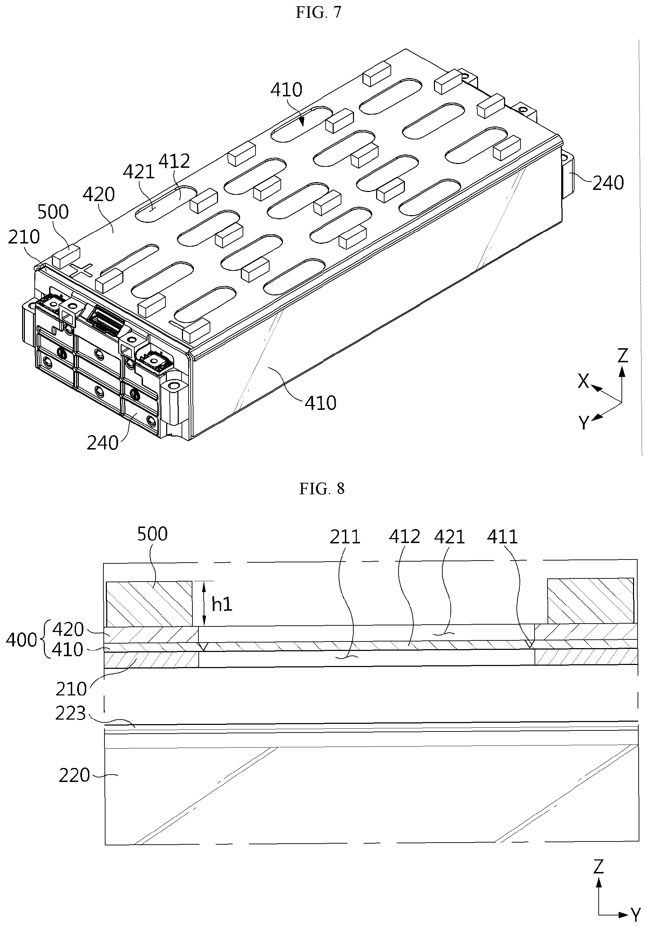

FIG. 6 is an exploded view illustrating the battery module 200, the venting cover 400, and an elastic member 500 in FIG. 3. FIG. 7 is a diagram illustrating the coupled state of the elements in FIG. 6.

Referring to FIGS. 3, 6, and 7, the elastic member 500 of the battery pack according to an embodiment of the present disclosure may be installed, fastened, coupled, fixed, or attached to the upper surface of the venting cover 400.

According to this configuration of the present disclosure, the elastic member 500 may stably provide restoring force RF to the venting cover 400. This may stably maintain the coupled state of the venting cover 400 and the battery module 200.

Referring to FIGS. 3, 6, and 7, a plurality of elastic members 500 may be provided in the battery pack according to an embodiment of the present disclosure.

According to this configuration of the present disclosure, the plurality of elastic members 500 may stably provide restoring force RF to the venting cover 400. The coupled state of the venting cover 400 and the battery module 200 may remain stable.

Referring to FIGS. 3, 6, and 7, the venting cover 400 of the battery pack according to an embodiment of the present disclosure may include a first cover 410.

The first cover 410 may be installed, fastened, coupled, fixed, or attached to the upper surface of the battery module 200. In addition, the first cover 410 may be installed, fastened, coupled, fixed, or attached to at least one side of the battery module 200.

The first cover 410 may be configured to cover the first venting holes 211. The first cover 410 may entirely cover the plurality of first venting holes 211. The first cover 410 may include a heat-resistant material.

According to this configuration of the present disclosure, the thermal safety of the battery pack may be improved. The first cover 410 may prevent or block flame or venting gas g generated outside the battery module 200 from flowing into the battery module 200 through the first venting hole 211. This may suppress propagation of thermal events.

Referring to FIGS. 3, 6, and 7, the first cover 410 of the battery pack according to an embodiment of the present disclosure may have a score line 411 facing the first venting hole 211.

The score line 411 may be used as a term that encompasses or indicates a perforated line 411, a notching line 411, a cutting line 411, a shredding line 411, a tear line 411, or a separation line 411. The score line 411 may be configured to easily rupture by pressure applied to the first cover 410.

According to this configuration of the present disclosure, the thermal safety of the battery module 200 may be improved. If a thermal event occurs inside the battery module 200, venting gas g may push the score line 411 through the first venting hole 211 to separate at least a portion of the first cover 410 or form a hole. Accordingly, the inside and outside of the battery module 200 may communicate with each other, so the venting gas g may be discharged to the outside of the battery module 200.

In addition, according to this configuration of the present disclosure, the first cover 410 may prevent or block high-temperature gas or ignitable particles generated outside the battery module 200 from flowing into the case 210. As a result, propagation of a thermal event to the battery cell 220 inside the case 210 may be blocked.

Referring to FIGS. 3, 6, and 7, the score line 411 of the first cover 410 of the battery pack according to an embodiment of the present disclosure may be configured to rupture for separation when a thermal event occurs in the battery module 200. The score line 411 may form a separation area 412. The separation area 412 may be an area surrounded by the score line 411.

The separation area 412 may face the first venting hole 211. In addition, the separation area 412 may face at least a portion of the plurality of battery cells 220. Alternatively, the first cover 410 or the separation area 412 may face at least a portion of the upper surface of the plurality of battery cells 220.

According to this configuration of the present disclosure, the thermal safety of the battery module 200 may be improved. When a thermal event occurs, the separation area 412 may be separated from the first cover 410. The venting gas g may be discharged to the outside through the first venting hole 211 and a hole that is formed by separation of the separation area 412.

Referring to FIGS. 3, 6, and 7, the score line 411 of the battery pack according to an embodiment of the present disclosure may extend along the perimeter of the first venting hole 211. Alternatively, the score line 411 may be formed within the area facing the first venting hole 211.

According to this configuration of the present disclosure, the thermal safety of the battery pack may be improved. When a thermal event occurs inside the battery module 200, the score line 411 may easily rupture. This may facilitate the discharge of venting gas g.

Referring to FIGS. 3, 6, and 7, the venting cover 400 of the battery pack according to an embodiment of the present disclosure may include a second cover 420. The venting cover 400 may be used as a term encompassing the first cover 410 and the second cover 420.

The second cover 420 may be installed, fastened, coupled, fixed, or attached to the top of the first cover 410. In addition, the second cover 420 may be installed, fastened, coupled, fixed, or attached to at least one side of the first cover 410. The second cover 420 may include a heat-resistant material or a fire-resistant material. For example, the second cover 420 may include a mica material. In addition, the second cover 420 may be made of a material with high hardness than the first cover 410.

According to this configuration of the present disclosure, the thermal safety of the battery pack may be improved. The second cover 420 may protect the battery module 200 from external flames. This may suppress propagation of thermal events.

In addition, according to this configuration of the present disclosure, the second cover 420 includes a material with high hardness, thereby preventing or suppressing the first cover 410 from being separated from the battery module 200. The coupled state of the first cover 410 and the battery module 200 may remain stable.

Referring to FIGS. 3, 6, and 7, the second cover 420 of the battery pack according to an embodiment of the present disclosure may include a second venting hole 421. The second venting hole 421 may be configured to expose the score line 411.

According to this configuration of the present disclosure, the thermal safety of the battery module 200 may be improved. When a thermal event occurs, the separation area 412 may be separated from the first cover 410. The venting gas g may be discharged to the outside through the first venting hole 211, a hole formed by the separation of the separation area 412, and the second venting hole 421.

FIG. 8 is a cross-sectional view taken along line B-B' in FIG. 2. FIG. 9 is a cross-sectional view taken along line A-A' in FIG. 1. Referring to FIGS. 8 and 9, the elastic member 500 of the battery pack according to an embodiment of the present disclosure may be compressed between the venting cover 400 and the pack cover 150. The pack cover 150 may be fastened to the side walls 120 or partition walls 300 such that the pack cover 150 may press the elastic member 500. For example, the height h1 of the elastic member 500 may be 14 mm before the pack cover 150 is fastened to the side walls 120 or partition walls 300. In addition, when the pack cover 150 is fastened to the side walls 120 or partition walls 300, the elastic member 500 may be compressed to have a height h2 of 8 mm. According to this configuration of the present disclosure, the thermal safety of the battery pack may be improved. The compressed elastic member 500 may provide restoring force RF to the venting cover 400. This may stably maintain the coupled state of the venting cover 400 and the battery module 200.

Referring to FIGS. 8 and 9, the elastic member 500 of the battery pack according to an embodiment of the present disclosure may be fixed between the venting cover 400 and the pack cover 150. The elastic member 500 may be fixed by being compressed by the pack cover 150 and the venting cover 400. In addition, the elastic member 500 may be installed, fastened, coupled, fixed, or attached to the upper surface of the second cover 420.

According to this configuration of the present disclosure, the thermal safety of the battery pack may be improved. The compressed elastic member 500 may provide restoring force RF to the venting cover 400. This may stably maintain the coupled state of the venting cover 400 and the battery module 200.

FIG. 10 is a cross-sectional view of the configuration in FIG. 9 when a thermal event occurs. Referring to FIGS. 9 and 10, the first venting hole 211 and the second venting hole 421 of the battery pack according to an embodiment of the present disclosure may be configured to communicate with each other when a thermal event occurs.

When a thermal event occurs in the battery cell 220, venting gas g may be generated. The venting gas g may pressurize the separation area 412 upward or in the +Z-axis direction through the first venting hole 211 of the case 210. Accordingly, the separation area 412 may be separated from the first cover 410. In addition, the separation of the separation area 412a may produce a hole in the first cover 410. As a result, the first venting hole 211 and the second venting hole 421 may communicate with each other. The venting gas g may be discharged to the outside of the battery module 200 through the first venting hole 211, the hole formed in the first cover 410, and the second venting hole 421. In this case, the elastic member 500 may provide restoring force RF to the venting cover 400.

According to this configuration of the present disclosure, the thermal safety of the battery module 200 may be improved. When a thermal event occurs, venting gas g may be easily discharged. In addition, the coupled state of the venting cover 400 and the battery module 200 may remain stable.

In addition, the battery pack according to the present disclosure may further include, in addition to the battery module, various components of the battery pack that are known at the time of filing the present disclosure, such as a BMS, a bus-bar, a relay, a current sensor, or the like.

The battery pack according to the present disclosure may be applied to vehicles such as electric vehicles or hybrid vehicles. That is, a vehicle according to the present disclosure may include the battery pack according to the present disclosure. In addition, the vehicle according to the present disclosure may further include various other components included in the vehicle, in addition to the battery pack. For example, the vehicle according to the present disclosure may further include a body, a motor, and a control device such as an ECU (electronic control unit).

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a base plate;
a battery module installed on the base plate and having a first venting hole on its upper surface;
a venting cover coupled to the upper surface of the battery module;
a pack cover configured to cover the venting cover; and
an elastic member provided between the venting cover and the pack cover.

2. The battery pack according to claim 1,
wherein the elastic member is
fixed between the venting cover and the pack cover.

3. The battery pack according to claim 1,
wherein the elastic member is
compressed between the venting cover and the pack cover.

4. The battery pack according to claim 1,
wherein the elastic member is
attached to the upper surface of the venting cover.

5. The battery pack according to claim 1,
wherein a plurality of elastic members
are provided.

6. The battery pack according to claim 1,
wherein the venting cover is
coupled to the upper surface of the battery module and comprises a first cover configured to cover the first venting hole.

7. The battery pack according to claim 6,
wherein the first cover has
a score line facing the first venting hole.

8. The battery pack according to claim 7,
wherein the score line is
configured to rupture when a thermal event occurs in the battery module.

9. The battery pack according to claim 7,
wherein the score line
extends along the perimeter of the first venting hole.

10. The battery pack according to claim 7,
wherein the venting cover
further comprises a second cover coupled to the top of the first cover.

11. The battery pack according to claim 10,
wherein the second cover comprises a second venting hole configured to expose the score line.

12. The battery pack according to claim 11,
wherein the first venting hole and the second venting hole are configured to communicate with each other when a thermal event occurs in the battery module.

13. A vehicle comprising the battery pack of any one of claims 1 to 12.
